# EUROPEAN PATENT APPLICATION

(11) **EP 1 398 974 A1**
(43) Date of publication of application: **17.03.2004**
(21) Application number: 02020718.9
(22) Date of filing: 14.09.2002
(51) Int. Cl.: H04Q 3/00, H04M 15/28

(54) **Method for setting up a call in a telecommunications network**

(71) Applicant: TELEFONAKTIEBOLAGET LM ERICSSON, 126 25 Stockholm (SE)
(72) Inventor: Garburg, Carsten, 52064 Aachen (DE); Wilke, Johannes, DE-52379 Langerwehe (DE)
(74) Representative: Tonscheidt, Andreas

(57) **Abstract**

The invention relates to a method for setting up a call between a first (A) and a second subscriber (B) in a telecommunications network that supports number portability. The method provides a calling subscriber with an indication that a called subscriber has been ported at least if the porting of the subscriber may lead to higher charging costs for the calling party.

## Description

### Technical field of the invention

The present invention relates to a method for setting up a call from a first subscriber to a second subscriber in a telecommunications network that supports number portability.

### Description of related art

Number portability is defined as three kinds of services, as operator portability, location portability, and service portability.
Operator portability is the change of an operator without changing the phone number. Location Portability offers the possibility of moving geographically within a telecommunications network without changing the phone number. Service Portability is the ability to keep the telephone number when changing the telecommunications network from a first network operating according to a first standard and offering first services to a second telecommunications network operating according to a second standard and offering second services which differ from the first services.

The implementation of number portability is described for example for mobile networks in the 3GPP (3^{rd} Generation Partnership Project) technical specifications TS 22.066, Version 4.0.0, published March 2001, and TS 23.066, Version 4.0.0, published March 2001.

It is a shortcoming of the state of the art that a calling party receives no notification that a called party is ported, even though the costs for the call may have increased significantly.

### Summary

It is an object of the invention to overcome this shortcoming of the state of the art.

This will be solved advantageously by the methods of claims 1, and 5, the user equipment of claim 7, and the network node of claim 8.

It is advantageous that a message from the calling subscriber in return to the notification is expected before the setting up of a call. This secures that the calling party can interrupt a call to a ported subscriber before the call created costs due to the porting.

It is also advantageous to implement a deciding unit in a user equipment of a subscriber. By this, the decision whether to continue the call is carried out automatically without causing further effort to the user.

Further advantageous embodiments of the invention can be derived from the dependent claims.

Advantageous is the sending of an identification of the domain a subscriber is ported to according to claim 2. By this, a decision whether to continue the call can be taken in dependence of the new domain.

Further advantageous is the determining of a second charging scheme used for a call to the ported subscriber and the transmission of an indication of the second charging scheme to the first subscriber according to claim 3. By this, a decision whether to continue the call can be taken in dependence of the second charging scheme.

Advantageous is the analysing and comparing of the first and the second charging scheme and that a notification is sent according to claim 4 only in the case that the second charging scheme may lead to a higher charging amount. This reduces signalling between the telecommunications network and user equipment in the case that a porting does not lead to higher costs for the calling party.

Also advantageous is to adapt the deciding unit according to claim 7 to base the decision whether to continue the call or not on a result of comparison of charging schemes. This allows taking additional costs caused by a porting into account.

Further advantageous is to limit the time from sending a request towards the first subscriber for an indication how to handle the call request until the reception of said indication by using a timer according to claim 9. By that, a maximum time value can be defined for the delay caused by the request for the indication.

### Brief description of the drawings

The following figures show:
Fig. 1 depicts a call set up according to the invention,
Fig. 2a depicts a first user network inter-working according to the invention,
Fig. 2b depicts a second user network inter-working according to the invention,
Fig. 2c depicts a third user network inter-working according to the invention,
Fig. 3 depicts a sequence of steps for a user equipment according to the invention,
Fig. 4 depicts a schematic of a user equipment according to the invention, and
Fig. 5 depicts a node according to the invention.

### Detailed description

In the following the invention will be further described by means of examples and by means of figures. The figures depict embodiments of the invention and do not limit its scope to the depicted examples.

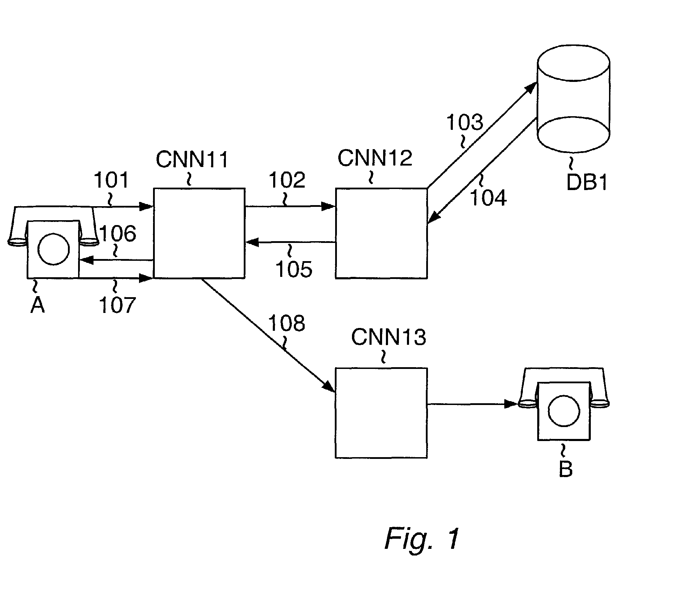

Fig. 1 depicts a call set up according to the invention. A first subscriber A sends in a first step 101 a call request for a call to a second subscriber B to a network node CNN11. The network node CNN11 analyses the call request, and routes the call to a second network node CNN12 in a next step 102. The second network node analyses the requested call and sends a query to a database DB1 in a step 103. The database comprises data about subscribers that are ported to a domain of a further network. The database DB1 receives the request, analyses it, and determines that the subscriber B has been ported to a domain of a further telecommunications network. The database returns the result in a step 104 to the second network node CNN12. The second network node CNN12 forwards the information that the second subscriber B has been ported to the first network node CNN11 in a next step 105. In a preferred embodiment of the invention it also drops the call back to the first network node CNN11.

In a next step 106, the first network node CNN11 informs the first subscriber A that the called subscriber B has been ported to a different network, and requests an indication how to handle the call request. The first subscriber A analyses the information and indicates, for example by sending a message, that the call request is still valid in a further step 107. The first network node then continues to set up the call to the second subscriber B in a next step 108, for example by routing the call to a third network node CNN13 that belongs to a different network and serves the called subscriber B.

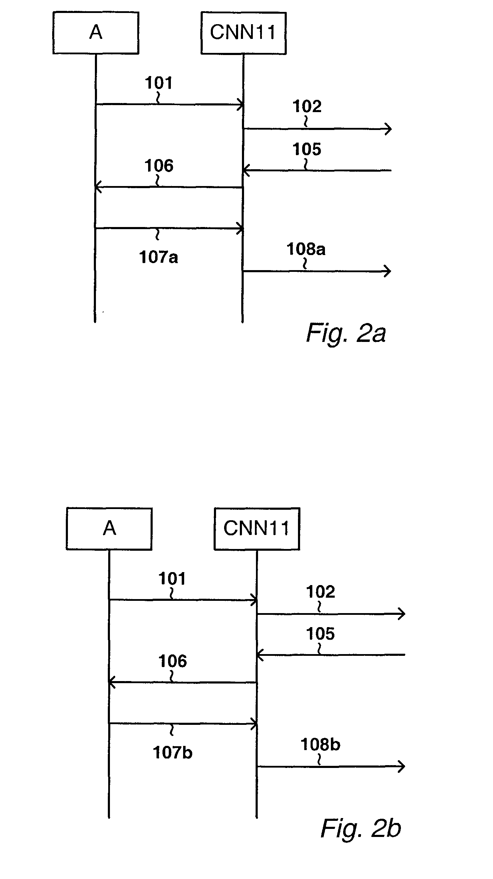

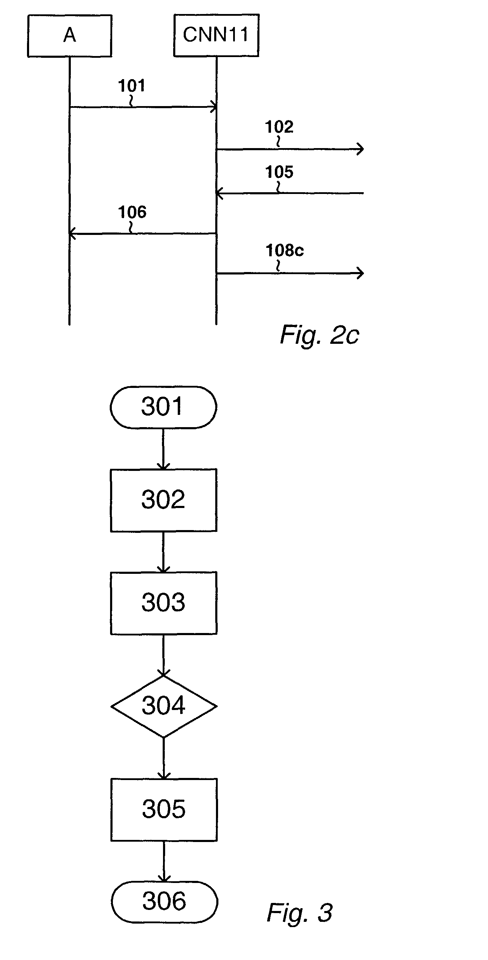

In an embodiment of the invention the database DB 1 sends also information about the telecommunications network the second subscriber B is ported to. Said information can be for example an identification of the telecommunications network the subscriber is ported to and information about a charging scheme of the ported to network. The network nodes CNN11, CNN12 forward the information to the first subscriber A. The first subscriber A takes this information into account when taking the decision how to handle the call request further. Examples of different handlings are given in more detail by means of the figures 2a, 2b, and 2c.

The configuration of three network nodes CNN11, CNN12, and CNN13 is taken just as an example. According to the invention also the first network node can be connected to the database DB1 or the second network node can be a transit node that is connected to the further telecommunications network the called subscriber is ported to.

Fig. 2a, 2b, and 2c depict user network inter-working according to the invention. The calling subscriber A, the network node CNN11 and the steps 101, 102, 105, and 106 are the same as depicted and described for figure 1.

In the case depicted by figure 2a, the first subscriber A decides not to continue the call and indicates this to the first network node CNN11 in a step 107a. In an embodiment of the invention, a deciding unit of the user equipment takes the decision. The decision taken by the deciding unit can depend on user settings entered into the user equipment. In a preferred embodiment, this decision is taken based on additional information provided by the database and forwarded by the network nodes. The first network node CNN11 then releases the call in a step 108a.

In the case depicted in figure 2b, the first subscriber A decides to modify the call request, for example by choosing a different carrier. In an embodiment of the invention, a deciding unit of the user equipment takes the decision. The decision taken by the deciding unit can depend on user settings or data entered into the user equipment. Such data are for example charging information about different carriers and domains served by said carriers. In a preferred embodiment, the decision to modify the call request is taken based on additional information provided by the database and forwarded by the network nodes CNN11, CNN12. The modifications are indicated to the first network node CNN11 in a step 107b. The first network node CNN 11 then attempts to set up the call according to the modifications in a step 108b.

In the case depicted by figure 2c, no reply is sent to the request of step 106 before the expiration of a timer value in the first network node CNN11. The first network node CNN11 then continues to set up the call in a step 108c. In another embodiment of the invention, the first network node CNN11 releases the call if the timer expires before an indication is received.

Figure 3 depicts a method as executed by a user equipment according to the invention. In a first step 301 the method starts. The user equipment sends a call request in a step 302 to a telecommunications network. In a following step 303 it receives an indication that the called party has been ported. In an embodiment of the invention the indication comprises a request for an indication how to handle the call request. In a preferred embodiment of the invention, the indication that the called party has been ported comprises additional information for example about a charging for calling the ported subscriber. In a next step 304 the user equipment decides whether to continue the call, that is the call request is still valid, or to modify the call request, for example by selecting a different carrier, or to invalidate the request. In a next step 305 the mobile sends a message including an indication of the decision to the network. Step 305 is optional if the decision taken by the user equipment is equal to a default setting of a telecommunication network node for the case that no message is sent. The method is completed by the communication of the decision 306, either by sending or not sending an indication how to handle the call request.

In a preferred embodiment of the invention, the indication that a subscriber has been ported is sent only if the porting can lead to higher costs for the first subscriber A.

From the perspective of a network node according to the invention, the following steps are performed. It receives a call request for a call to a subscriber B. A request to a database is sent whether the called subscriber has been ported or not. Afterwards the network node receives information that the called subscriber B has been ported. The network node sends a request for an indication to a calling subscriber A whether the call request is still valid, for example by sending an indication that the called subscriber B has been ported. In a preferred embodiment of the invention, the network node starts a timer with a predefined timer value at sending the request. The network node can receive either an indication that the call request is still valid, it then routes the call towards the ported called subscriber B. It can also receive an indication that the call request is modified, for example that a different carrier is to be chosen. The network node will then act accordingly. It can also receive an indication that the call shall not be processed any further, and it will then release the call. In the preferred embodiment the network node can also receive no indication before the timer value expires. In that case the network node executes a predefined action for example releases the call or sets the call up to the ported subscriber B.

In a preferred embodiment of the invention the network node receives information about a charging scheme of the domain the called subscriber is ported to. It analyses the received charging scheme, from now on called the second charging scheme. It also analyses the charging scheme that would have been applied if the subscriber had not been ported, from now on called the first charging scheme. Information related to the first charging scheme can be stored in the network node or requested by the network node from a further node. It compares the two charging schemes and only if the second charging scheme may lead to a higher charging amount than the first charging scheme, it sends the indication to the calling first subscriber A. If the second charging scheme may lead to the same or lower charging costs, the call set up to the called second subscriber is continued without sending an indication to the calling subscriber A.

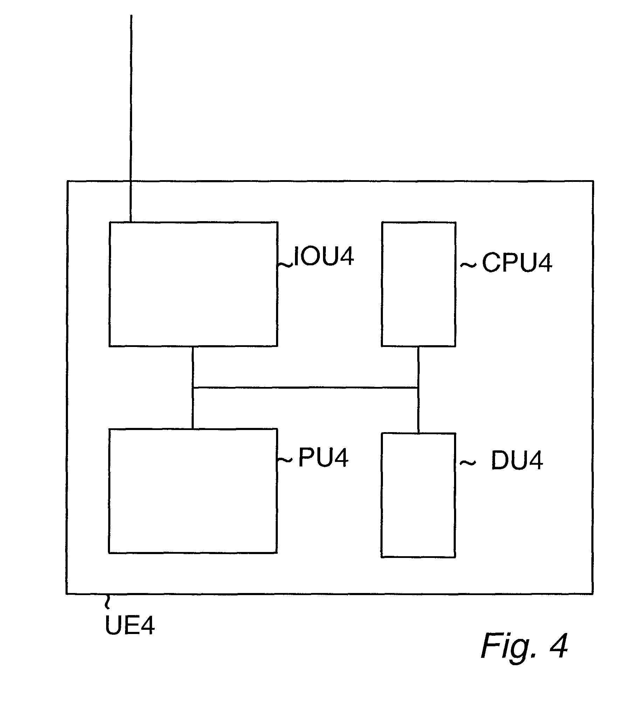

Figure 4 depicts a user equipment UE4 according to the invention. The user equipment UE4 comprises an input/output unit IOU4 for communicating with a telecommunications network. It further comprises a processing unit PU4 for analysing a notification that a called subscriber has been ported and for determining from said analysis a domain the subscriber is ported to. The user equipment further comprises a deciding unit DU4 adapted to decide how to handle the call request based on information received from the processing unit. In a preferred embodiment of the invention the user equipment further comprises an analysing unit CPU4 for analysing and comparing charging schemes. In said preferred embodiment the deciding unit DU4 is adapted to base its decision to how to handle the call request on a result of the comparison of charging schemes.

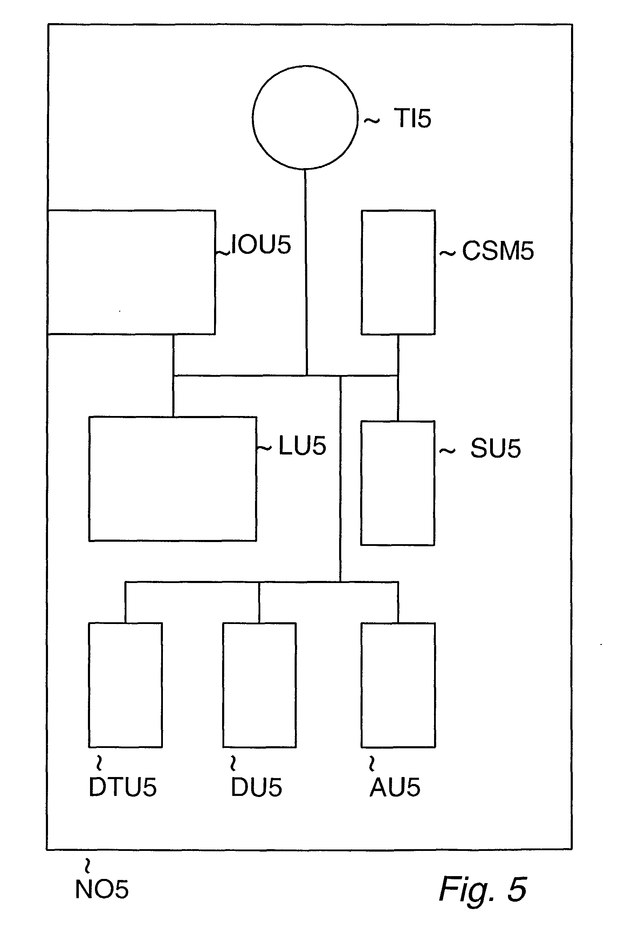

Figure 5 depicts a network node for a telecommunications network that supports number portability. The network node comprises an input/output unit IOU5 for receiving an indication that a called second subscriber B is ported, and means for setting up a call CSM5. It further comprises a sending unit SU5 for sending an indication of the porting towards a calling first subscriber A, and a logical unit LU5 for receiving and processing an indication how to handle a call request from the first subscriber A. The depicted network node further comprises a timer TI5 for checking whether an indication how to handle the call request is received before a predefined threshold timer value is exceeded since the sending of an indication to the first subscriber. For taking charging schemes into account, the network node NO5 comprises a determining unit DTU5 for determining a charging scheme for a ported subscriber, an analysing unit AU5 for analysing and comparing charging schemes and a deciding unit DU5 for deciding whether to send an indication or not to a first subscriber that a second subscriber is ported.

Each of the units in the user equipment and the network node can be implemented by means of hardware, software or a combination of both.

The invention also relates to software for controlling a user equipment in a way that it performs a method according to claim 5.

## Claims

1. Method for setting up a call between a first subscriber (A) and a second subscriber (B) in a telecommunications network that supports number portability, the network comprising at least one node, and a number portability database, wherein the method comprises the following steps:
- receiving a call request from the first subscriber (A) for a call to the second subscriber (B),
- determining from the number portability database that the second subscriber (B) is ported,
- sending a notification towards the first subscriber (A) that the second subscriber (B) is ported, requesting an indication that the call request is still valid,
- receiving the indication that the call request is still valid, and
- setting up the call to the ported second subscriber (B).

2. Method according to claim 1, wherein the notification sent towards the first subscriber (A) includes an identification of a domain the second subscriber (B) is ported to.

3. Method according to claim 1 or 2, with the steps of:
- determining that the second subscriber (B) is ported into a domain with a second charging scheme for charging calls that differs from a first charging scheme for charging calls used in a domain where the second subscriber (B) was located before being ported, and
- sending an indication of a second charging scheme towards the first subscriber (A).

4. Method according to claim 1 or 2, with the additional steps of
- determining that the second subscriber (B) is ported into a domain with a second charging scheme for charging calls that differs from a first charging scheme for charging calls used in a domain where the second subscriber (B) was located before being ported,
- analysing the second charging scheme,
- analysing the first charging scheme,
- comparing the first and the second charging scheme,
- determining that the second charging scheme may lead to a higher charging amount for a call than the first charging scheme, and
- sending an indication of a second charging scheme towards the first subscriber (A).

5. Method for a user equipment of a first subscriber (A) for calling a second subscriber (B) via a telecommunications network with the steps of:
- sending a call request for a call to the second subscriber (B) to the telecommunications network,
- receiving a notification that the second subscriber (B) is ported from the telecommunications network,
- deciding or receiving an indication of a decision to continue the call request, and
- sending a message indicating to the telecommunications network that the call request is still valid.

6. User equipment (UE4) for communicating in a telecommunications network, **characterised by** comprising a processing unit (PU4) for analysing a notification that a called subscriber (B) has been ported and for determining from said analysis a domain a called subscriber is ported to, and a deciding unit (DU4) adapted to decide how to handle the call request based on information received from the processing unit.

7. User equipment (UE4) according to claim 6, with an analysing unit (CPU4) for analysing and comparing charging schemes, wherein the deciding unit (DU4) is adapted to base the decision how to handle the call request on a result of the comparison of charging schemes.

8. Network node for a telecommunications network that supports number portability, with an input/output unit (IOU5) for receiving an indication that a called second subscriber (B) is ported, and means for setting up a call (CSM5), **characterised by** a sending unit (SU5) for sending an indication of the porting towards a calling first subscriber (A), and a logical unit (LU5) for receiving and processing an indication how to handle a call request from the first subscriber (A).

9. Network node according to claim 8, with a timer (TI5) for checking whether an indication how to handle the call request is received before a predefined threshold timer value is exceeded since the sending of an indication to the first subscriber.

10. Network node according to claim 8 or 9, with a determining unit (DTU5) for determining a charging scheme for a ported subscriber, an analysing unit (AU5) for analysing and comparing charging schemes and a deciding unit (DU5) for deciding whether to send an indication or not to a first subscriber that a second subscriber is ported.
